(19) Europäisches Patentamt
European Patent Office
Office européen des brevets

(11) EP 0 866 660 B1

(12) **EUROPEAN PATENT SPECIFICATION**

(45) Date of publication and mention of the grant of the patent:
**15.03.2000 Bulletin 2000/11**

(21) Application number: **96941784.9**

(22) Date of filing: **12.12.1996**

(51) Int Cl.$^7$: **A23C 20/00**, A23L 1/308

(86) International application number:
**PCT/GB96/03072**

(87) International publication number:
**WO 97/21354 (19.06.1997 Gazette 1997/26)**

(54) **REDUCED CALORIE CHEESE PRODUCTS**
KALORIENREDUZIERTE KÄSEPRODUKTE
FROMAGES A TENEUR EN CALORIES REDUITE

(84) Designated Contracting States:
**BE DE ES FR GB IT NL SE**

(30) Priority: **13.12.1995 US 571662**

(43) Date of publication of application:
**30.09.1998 Bulletin 1998/40**

(73) Proprietors:
- **Bestfoods**
**Englewood Cliffs, NJ 07632 (US)**
- **ARCO Chemical Technology, L.P.**
**Greenville, Delaware 19807 (US)**

(72) Inventors:
- **SEKULA, Bernard, Charles**
**Glen Gardner, NJ 08826 (US)**
- **TANCIBOK, Krystyna, Urzsula**
**Union, NJ 07083 (US)**

(74) Representative: **Stevens, Ian Edward et al**
**Stevens, Hewlett & Perkins,**
**1 St. Augustine's Place**
**Bristol BS1 4UD (GB)**

(56) References cited:
**EP-A- 0 571 218**
**EP-A- 0 571 219**
**EP-A- 0 651 947**
**US-A- 4 861 613**
**US-A- 4 983 329**
**US-A- 5 043 179**
**US-A- 5 061 504**
**US-A- 5 304 665**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### Field of the Invention

The present invention has to do with reduced calorie cheese products. More specifically, the invention relates to cheese products wherein some or all of the milk fat has been replaced by a fatty acid-esterified propoxylated glycerin composition.

### Description of the Related Art

Imitation cheeses made with non-dairy or milk products, and vegetable fats such as coconut, palm, soy, sunflower, cottonseed or their combination are being produced although the nutritional value of such products has been criticized. These products function much like their natural counterparts, offer reasonably similar taste, and are quick to prepare, requiring not much more than blending of the ingredients.

Other cheese products which are not natural cheeses are pasteurized process cheese food and process cheese. Pasteurized process cheese food is a dairy product containing more moisture and less fat than process cheese. Its pH is lower and the pasteurizing temperatures must be higher in order to provide greater protection against bacterial spoilage. Alkali salts are used to emulsify the cheese mass, and organic acids, such as citric, lactic, and acetic acid are introduced to decrease the pH to about 5.2 as compared to natural cheeses which may have pH of 5.6 to 5.8. Gums and starches are often used for water retention. In the United States, Federal Standards of Identity state that process cheese foods must contain not less than 44% and not more than 60% moisture, and not less than 20% milk fat.

Cream cheese, By Federal Standards of Identity, contains at least 33% fat, and not more than 55% moisture. It is formulated very much like homogenized ice cream mixes and can be either hot or cold packed. Cream and Neufchatel cheeses are soft, unripened cheeses. They are smooth in texture, not like cottage cheese, as their curds are broken by mechanical agitators and not cut with knives.

Cheddar cheese is a distinct type of cheese but there are many varieties or modified forms of it. Natural cheddar cheese is obtained by piling and repiling blocks of warm curd in the cheese vat for about two hours during which time lactic acid increases to a point where coliform bacteria are killed by the free hydrogen ions and the curds are flattened to the point where they lose their identity. Most Cheddar cheese is ripened at about 4°C for four to twelve months. Under Federal Standards of Identity, Cheddar Cheese must contain not more than 39.0% moisture and not be less than 50% of the fat as dry matter. It must be "aged for 60 days or more" before it is sold to the consumer.

Among hard Italian cheeses, Parmesan is the most popular in the United States. It is defined by the Federal Standards of Identity as containing not more than 32% moisture, with a total solids of not less than 32% fat, and minimum curing time must be not less than 10 months.

Many attempts have been made to replace the fat in cheese and imitation cheese products with non-fat bulking agents commonly used in the manufacture of foods. Starches, gums, proteins and non-digestible fatty substances are presently used for this purpose.

Fat replacement compositions which have been developed for use in low calorie fat-containing foods are known. An early development employing sugar fatty acid esters is described in U.S. Patent No. 3,600,186. The compositions are generally described as suitable for use in dairy products, but cheese is not mentioned specifically.

U. S. Patent Nos. 5,061,503 and 5,061,504 describe synthetic cheese analogs having reduced calories and animal fat. The analogs employ low-calorie fatty materials which include polyol fatty acid polyesters, preferably sugar, sugar alcohol, and polyglycerol fatty acid polyesters which are solid or semisolid at room temperature and liquid at body temperature. An anti-anal leakage agent also is used to prevent leakage of non-digested liquid low-calorie fatty materials through the anal sphincter.

A low fat processed cheese product which employs microreticulated microcrystalline cellulose to simulate the texture and mouthfeel of fat is disclosed in U. S. Patent No. 5,215,778. The microreticulated microcrystalline cellulose is described as porous and particulate and it is employed in an amount from about 0.25 to about 2 weight percent of the substantially fat-free processed cheese product.

US Patent No. 5,225,220 describes a process of manufacturing cheese wherein carageenans are used to controllably react with milk casein, allowing processing of the cheese curd to obtain a low fat cheese having what is said to be a taste and texture quite similar to typical fat containing cheeses.

All of the low calorie cheese-type compositions discussed above have drawbacks either in the processes of their manufacture or the flavor and mouthfeel characteristics of the products themselves.

Reduced calorie food compositions containing fat-type organoleptic ingredients are known wherein an esterified epoxide-extended polyol is employed as a full or partial replacement for vegetable oils and fats. Fat substitutes of this type are disclosed in US Patent No. 4,861,613 to White et al. (referred to herein as "White" and incorporated by reference herein in its entirety). However, it has not heretofore been known how to modify such substances so as

to render them suitable for use as milk fat replacements in cheese products.

EP-A-0571219 describes esterified propoxylated glycerin fat substitute compositions resistant to gastrointestinal side effects. The compositions have an average number of oxypropylene units per equivalent of glycerin of from 3 to 20, a fatty acid acyl group content such that at least 40 mole percent of the fatty acid acyl groups in the composition are derived from a $C_{20}$ - $C_{24}$ saturated linear fatty acid, and a solid fat index at 27 °C of at least 30.

EP-A-0651947 relates to reduced calorie cocoa butter substitutes based on esterified propoxylated glycerin compositions containing acyl groups derived from $C_{12}$ - $C_{24}$ saturated linear fatty acids wherein at least 50 mole percent of the total acyl groups are derived from no more than two different such acids. The cocoa butter substitutes closely mimic the desirable melting properties of natural cocoa butter.

Essential materials for acceptable cheese-type products are good quality skim milk, casein, food grade emulsifiers and vegetable fats. This invention utilizes all of these but replaces the vegetable fats with fatty acid-esterified propoxylated glycerin compositions whose melting characteristics approximate the behaviors of the natural cheese counterparts. The advantage is apparent in the ease of emulsification, no interference with natural flavor of the cheese and shortened curing time, when preferred, as the fatty acid-esterified propoxylated glycerin compositions impart their own physical characteristics to the finished products. Accordingly, it has now been found that certain fatty acid-esterified propoxylated glycerin compositions can be employed as a substitute for some or all of the milk fat in cheese products. The compositions have a bland flavor and the ability to form a stable product. They can be used to make fine tasting, premium quality, low-calorie cheese products having a texture similar to natural cheese. The cheese products of the invention also have a taste and appearance similar to natural cheese.

In the present specification and claims, all parts and percentages are by weight unless otherwise specified.

## SUMMARY OF THE INVENTION

The fat replacement compositions of the invention are comprised of one, or a mixture of two or more, fatty acid-esterified propoxylated glycerin compositions that can be used to replace all or a portion of the butterfat in cheese products. The calorically reduced cheese products possess characteristics simulating the texture and flavor of conventional fat-containing cheeses.

The fatty acid-esterified propoxylated glycerin compositions (sometimes referred to herein as "EPG" in the singular form and as "EPGs" in the plural form) are made by incorporating propylene oxide (sometimes referred to herein as "oxypropylene" or "PO") groups into a typical triglyceride fat as described in White. The average number of PO groups which are incorporated into a fatty acid is called the propoxylation number. The melting point, melting profile and other characteristics of the composition can be modified by adjusting the propoxylation number, the fatty acid chain length and level of unsaturation. Similarly, two or more different EPGs (i.e., having different propoxylation numbers) of the same fatty acid, two or more EPGs of different fatty acids having the same or different propoxylation numbers, and any combination thereof which provides the desired fat replacement characteristics may be utilized.

The most suitable EPG or combination of EPGs will vary depending upon the type of cheese being made because the textures of different cheeses can vary considerably as to hardness, softness and other characteristics such as flavor and mouthfeel. The selection of the most suitable EPG or combination of EPGs according to the invention is based on the hardness of the cheese, with EPGs which are harder at room temperature being used in cheeses which are harder at room temperature. Soft cheese, such as cream cheese, semi-hard cheese, such as cheddar, and hard cheese, such as parmesan, accordingly, all can be formulated with the appropriate selection of fat replacement compositions of the invention.

According to one embodiment of the invention there is provided a reduced calorie cheese composition comprising a soft or semi-hard cheese wherein from about 50% to about 100% by weight of the fat component is replaced by a fatty acid-esterified propoxylated glycerin composition comprising 1) a fully hydrogenated soybean fatty acid-esterified propoxylated glycerin composition having a propoxylation number of about 5 and 2) a fully hydrogenated soybean fatty acid-esterified propoxylated glycerin composition having a propoxylation number of about 14.

Another embodiment of the invention is a reduced calorie cheese composition comprising a hard cheese wherein from about 50% to about 100% by weight of the fat component is replaced by a fatty acid-esterified propoxylated glycerin composition having a solid fat index as measured by dilatometry of more than about 25 but less than about 70 at 33.3°C (92°F) and less than about 10 at 40.0°C (104°F), the fatty acid-esterified propoxylated glycerin composition having an average number of oxypropylene units per equivalent of glycerin of from about 4 to 6 and an iodine value of from about 2 to 6, the fatty acids being comprised of about 35 to 45% by weight behenic acid and about 35 to 45% by weight stearic acid.

In the present invention, the preferred embodiments of the reduced calorie cheese products employ as fat replacement ingredients in a recipe for making cheese, one or more EPGs selected from the group consisting of a fully hydrogenated soybean fatty acid-esterified propoxylated glycerin having a propoxylation number of about 5 (referred to herein as "FHEPG-05 soyate"), a fully hydrogenated soybean fatty acid-esterified propoxylated glycerin having a

propoxylation number of about 14 (referred to herein as "FHEPG-14 soyate") and an EPG which is prepared by the propoxylation of glycerol to a propoxylation number of about 5 followed by esterification with a blend of about nine parts fully hydrogenated rapeseed oil fatty acids and about one part liquid soybean oil fatty acids and hydrogenation to a final IV of ≤ about 10, referred to herein as EPG-05 9HR/1LS (IV≤10), preferably to final IV of from about 2-6, referred to herein as EPG-05 9HR/1LS(IV=2-6).

## BRIEF DESCRIPTION OF THE DRAWING

Figure 1 illustrates the melting profiles for butter fat, FHEPG-05 soyate, FHEPG-14 soyate and a 60/40 blend of FHEPG-05 soyate and FHEPG-14 soyate.

Figure 2 illustrates the melting profile for EPG-05 9HR/1LS(IV = 3.9).

Each melting profile is a plot of the solid fat indices, as measured by dilatometry following AOCS Method Cd 10-57 (available from American Oil Chemists' Society, 1608 Broadmoor Dr., Champaign, IL 61821-5930 USA) for each composition over the temperature range from 0°C (32°F) to 40°C (104°F).

## DETAILED DESCRIPTION OF THE INVENTION

The reduced calorie cheese products of this invention are prepared by selecting a fatty acid-esterified propoxylated glycerin composition having a melting profile similar to the melting profile of the desired cheese. Accordingly, it has how been unexpectedly found that the melting profile of the fat replacement composition is not necessarily similar to the melting profile of the fat which is being replaced.

The fat replacement compositions of the invention are comprised of one EPG, a mixture of two or more different EPGs (i.e., having different propoxylation numbers) of the same fatty acid, a mixture of two or more EPGs of different fatty acids having the same or different propoxylation numbers, and any combination thereof, as long as the desired melting profile characteristics are obtained.

The fatty acid-esterified propoxylated glycerin compositions of this invention can function effectively as reduced calorie fat replacement compositions in a variety of cheeses ranging from soft spreadable cheeses to hard cheeses, especially where the butterfat component normally contributes substantially to the caloric content of the cheese. For example in cream cheese the butterfat component contributes about 90% of the calories, cheddar cheese about 75% and parmesan cheese about 46%.

The fatty acid-esterified propoxylated glycerin compositions of this invention contain glyceryl residues, oxypropylene units, and fatty acid acyl

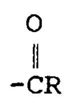

groups. Typically, the compositions are mixtures of individual fatty acid-esterified propoxylated glycerin compounds which may differ from each other in degree of propoxylation and acyl group composition. The glyceryl residue may have the generic structure

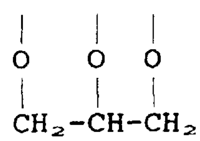

and is derived from glycerin

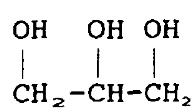

or a glycerin equivalent. The oxypropylene units are generally interspersed between glyceryl residues and the acyl groups and have the structure

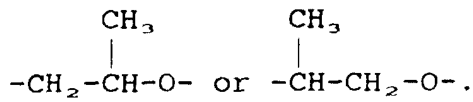

Typically, more than one oxypropylene unit may be present between an oxygen of an individual glyceryl residue and an acyl group such that a polyoxypropylene unit is created. However, a single "branch" or "arm" of the fatty acid-esterified propoxylated glycerin may contain only one oxypropylene unit. Certain of the acyl groups may be attached directly to the glyceryl residue, without any intervening oxypropylene units, although an average of at least about 3 oxypropylene units per glyceryl residue must be present in the overall composition. The average number of oxypropylene units in the fatty acid-esterified propoxylated glycerin composition is from about 3 to about 16. The presence of oxypropylene units is critical, as the oxypropylene units help to lower the melting point of the compositions thereby improving the mouthfeel and melting characteristics as compared to analogous compositions not containing oxypropylene units.

In order to maximize the resistance of the fatty acid-esterified propoxylated glycerin composition towards pancreatic lipase enzyme-catalyzed hydrolysis, the oxypropylene units adjacent to the acyl groups should be oriented such that secondary rather than primary ester linkages are created. That is, the methyl group should be located on the carbon atom attached to the oxygen atom forming part of the ester linkage as follows:

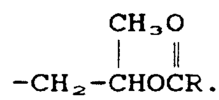

Preferably, at least about 80% of the ester linkages in the overall composition are secondary. Most preferably, at least about 95% of the ester linkages are secondary. However, the secondary ester content can be less than about 80% without adversely affecting the melting properties of the EPGs of the invention.

It is desirable for the fatty acid-esterified propoxylated glycerin composition to be substantially esterified such that it has an average of at least about 2.5 (more preferably, at least about 2.9) fatty acid acyl groups per equivalent of glycerin. The extent of esterification may be readily determined by conventional analytical methods such as hydroxyl number.

The structure of the composition preferably is such that the composition has a porcine pancreatic lipase hydrolysis rate of less than about 10% as compared to an olive oil standard. Preferably, the relative hydrolysis rate is less than about 1% of the olive oil rate. Methods of measuring porcine pancreatic lipase hydrolysis rate are described in White.

The average number of oxypropylene units in the EPG must not be so low as to result in a high proportion of the acyl groups being attached directly to glyceryl residues since such directly attached acyl groups will be nearly as susceptible to enzymatic cleavage as the acyl groups in a conventional fully digestible triglyceride, thus reducing the usefulness of the composition as a low calorie fat substitute. At the same time the average number of oxypropylene units should not exceed about 14 since the resulting compounds may be substantially lower in melting point or higher in melt viscosity and thus would not be suitable for use as fat replacements for use in cheese.

The melting characteristics for a given EPG may be adjusted as needed by varying the average number of oxypropylene units per glycerin (propoxylation number) present in the composition. At a constant fatty acid acyl group content (i.e., if the relative proportions of the different acyl groups present are fixed), the solid fat index at a particular temperature will increase as the propoxylation number is decreased and will decrease as the propoxylation number is increased. As the average number of fatty acid acyl group carbons per equivalent of glycerin decreases or as the iodine number of the composition increases (as a result of increasing the proportion of unsaturated fatty acid acyl groups present), the average number of oxypropylene units per glycerin will need to be decreased to maintain the solid fat index at a given temperature above a predetermined target value. If a particular fatty acid-esterified propoxylated glycerin composition has an undesirably high solid fat index at a given temperature the index may be brought below a predetermined target value by increasing the propoxylation number. By so adjusting the average number of oxypropylene units per equivalent of glycerin, the melting characteristics of each EPG may be controlled, and one EPG or a mixture of two or more EPGs may be employed to obtain a fat replacement composition having characteristics which are the most suitable for the type of cheese being made.

Suitable EPGs may be prepared using either fatty acids or fatty acid derivatives such as fatty acid esters, fatty acid halides, or fatty acid anhydrides. Generally speaking, $C_{12}$-$C_{24}$ saturated linear fatty acids and their derivatives can be used as starting materials for preparing the EPGs of the present invention.

In addition, the iodine number (which reflects the proportion of unsaturated fatty acid acyl groups in the composition) must be less than about 30, more preferably is less than about 20, and most preferably is less than about 10 centigrams $I_2$ per gram of the composition. A relatively minor proportion of unsaturated fatty acid acyl groups may be advantageous, however, in order to ensure that the composition does not melt over an excessively narrow range. Iodine number (also referred to as iodine value, abbreviated as "IV") may be measured by AOCS method Cd 1-25.

The $C_{12}$-$C_{24}$ saturated fatty acid is linear (i.e., nonbranched) and preferably contains only one carboxylic acid functionality. The acyl group may thus correspond to the general structure

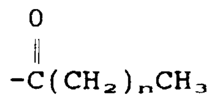

wherein n is an integer of from 10 to 22. The value of n is most conveniently an even number (e.g., 10, 12, 14, 16, 18, 20, or 22) since the corresponding fatty acids are readily available at low cost from natural sources such as edible triglycerides. Specific illustrative fatty acids suitable for use as this component of the fatty acid-esterified propoxylated glycerin compositions include, but are not limited to, lauric acid, myristic acid, stearic acid, palmitic acid, eicosanoic (arachidic) acid, heneicosanoic acid, docosanic (behenic) acid, tricosanoic acid, and tetracosanoic (lignoceric) acid. Mixtures of these $C_{12}$-$C_{24}$ saturated linear fatty acids may also be utilized to advantage, as discussed above.

While all of the acyl groups in the fatty acid-esterified propoxylated glycerin composition may be derived from $C_{12}$-$C_{24}$ saturated linear fatty acid, the compositions may contain minor amounts of acyl groups derived from other $C_8$-$C_{24}$ fatty acids. Preferably, the proportion of such other acyl groups is less than about 40%. Generally speaking, the incorporation of acyl groups which are relatively short in length ($C_8$-$C_{18}$), unsatu rated, and/or branched will tend to decrease the melting point of the resulting EPG.

The fatty acids which optionally may be used in combination with the required $C_{12}$-$C_{24}$ saturated linear fatty acids may be any of the known fatty acids such as caprylic acid, pelargonic acid, capric acid, oleic acid, cetoleic acid, palmitoleic acid, gad-oleic acid, erucic acid, rincinoleic acid, linoleic acid, linolenic acid, myristoleic acid, eleostearic acid, arachidonic acid, or mixtures of these acids. Preferably, linear monocarboxylic acids containing from 0 to 5 double bonds are employed.

The proportions and chemical structures of the fatty acid acyl groups in the fat replacement compositions of this invention should be selected such that the mouthfeel characteristics are similar to those for the type of cheese which is being prepared. Increasing the ratio of average number of fatty acid acyl group carbons per equivalent of glycerin will shift the melting range of an EPG to a higher average temperature while decreasing the ratio will shift the melting range to a lower average temperature.

The average number of fatty acid acyl group carbons per equivalent of glycerin in the fatty acid-esterified propoxylated glycerin compositions of the invention may be readily calculated from a knowledge of the fatty acid acyl group content (i.e., the chemical structures and relative proportions of the fatty acids used to prepare the compositions). The following formula may be used to calculate this average number ($N_a$) for a fatty acid-esterified propoxylated glycerin composition prepared using fatty acids A and B:

$$N_a = \frac{\text{moles A x no. carbons in A}}{\text{moles propoxylated glycerin}} + \frac{\text{moles B x no. carbons in B}}{\text{moles propoxylated glycerin}}$$

For example, a composition prepared by reacting a mixture of 1.5 moles of stearic acid (a $C_{18}$ fatty acid) and 1.5 moles of eicosanoic acid (a $C_{20}$ fatty acid) with 1 mole of propoxylated glycerin containing an average of 7 oxypropylene units per glycerin will have an average of 57 fatty acid acyl carbons per equivalent of glycerin.

To minimize the available caloric content of the fatty acid-esterified propoxylated glycerin fat replacement compositions of this invention, the chemical composition should be selected such that the average molecular weight is at least about 800. More preferably, the minimum molecular weight is about 1000. In order for the fatty acid-esterified propoxylated glycerin composition to function as a suitable replacement for the natural fat in cheese it is also desirable that the average molecular weight not exceed about 2200. Preferably, the molecular weight is below about 2000.

As explained above, the preferred EPGs of the invention are different for different kinds of cheese.

A preferred embodiment of the invention for cream cheese and cheddar cheese, for example, employs as a fat replacement composition a mixture of a stearic acid-esterified propoxylated glycerin composition having an average number of oxypropylene units per equivalent of glycerin (propoxylation number) of about 5, and a stearic acid-esterified propoxylated glycerin composition having a propoxylation number of about 14, an iodine number less than about 10, an average number of fatty acid acyl group carbons per equivalent of glycerin of from about 51 to about 57, and a melting profile similar to butter fat. For this embodiment, fatty acids which are predominantly stearic, having at least

about 75% and preferably at least about 80% by weight of saturated $C_{18}$ fatty acid, are most preferred. For example, hydrogenated soybean fatty acid is predominantly stearic, generally from about 83% to about 93% by weight, and it has been found to be particularly suitable for preparing the butter fat substitutes of the invention. Other fatty acid sources having more than about 75% stearic acid after hydrogenation include corn oil, cottonseed oil, olive oil, peanut oil, canola (low erucic rapeseed) oil, safflower oil, sesame oil, sunflower oil and mixtures thereof.

A particularly preferred embodiment of the invention for cream cheese and cheddar cheese employs as a fat replacement composition a mixture of a fatty acid-esterified propoxylated glycerin composition having an average number of oxypropylene units per equivalent of glycerin (propoxylation number) of about 5 wherein at least about 80% by weight of the fatty acid is stearic acid, and a fatty acid-esterified propoxylated glycerin composition having a propoxylation number of about 14 wherein at least about 80% by weight of the fatty acid is stearic acid, an iodine number less than about 10, an average number of fatty acid acyl group carbons per equivalent of glycerin of from about 48 to about 56, and a melting profile similar to butter fat.

The preferred EPG of the invention for parmesan cheese is made by preparing a mixture of about 90% by weight hydrogenated rapeseed fatty acid and about 10% by weight soya fatty acid and esterifying the mixture with propoxylated glycerol to synthesize a crude EPG. The product is a propoxylated glycerin composition having a propoxylation number of about 5, an iodine number less than about 10 preferably less than about 6, an average number of fatty acid acyl group carbons per equivalent of glycerin of from about 54 to about 60, and a melting point of from about 95 to about 110°F. For this embodiment, behenic (i.e. saturated $C_{22}$) acid-containing fatty acid compositions are employed. Fatty acid compositions which are relatively high in behenic acid content, having at least about 30% and preferably at least about 35% by weight of $C_{22}$ saturated fatty acid, are most preferred.

Sources of behenic acid and stearic acid are well-known. For example, the fatty acids derived from rapeseed oil contain a relatively high proportion (typically about 30 to about 50 weight %) of $C_{22}$ fatty acids. The erucic acid present may be readily converted by hydrogenation to behenic acid, either before or after incorporation into the fatty acid-esterified propoxylated glycerin composition. A number of vegetable oils are known which contain high proportions (typically about 70 to about 95 weight %) of $C_{18}$ fatty acids. The unsaturated $C_{18}$ fatty acids present may be hydrogenated before or after incorporation into the fatty acid-esterified propoxylated glycerin composition. Illustrative vegetable oils of this type include, but are not limited to, soybean oil, corn oil, cottonseed oil, olive oil, peanut oil, canola oil, safflower oil, sesame oil, sunflower oil, and the like. Fatty acids derived from mixtures of such oils may also be utilized to advantage.

One specific type of EPG suitable for use in accordance with the present invention is a fatty acid-esterified propoxylated glycerin composition having an average number of oxypropylene units of from about 4 to about 6 and an iodine value (also referred to herein as "IV") of from about 2 to about 6, wherein the fatty acids are comprised of about 35 to about 45% by weight behenic acid and about 35 to about 45% by weight stearic acid (the balance of the fatty acids being any of the other known fatty acids).

In another desirable embodiment, the fatty acid-esterified propoxylated glycerin composition has an iodine value less than or equal to about 10 (i.e., 0-10) and is obtainable by esterifying a propoxylated glycerin having an average number of oxypropylene units of from about 4 to about 6 with a fatty acid mixture wherein from about 80 to about 95 weight % of the fatty acid mixture are derived from rapeseed oil and the balance of said fatty acids are derived from a vegetable oil selected from the group consisting of soybean oil, corn oil, cottonseed oil, olive oil, peanut oil, canola oil, safflower oil, sesame oil, sunflower oil, and mixtures thereof.

A particularly preferred EPG of the invention is made by preparing a mixture of about 90% by weight hydrogenated rapeseed fatty acid and about 10% by weight soya fatty acid and esterifying the mixture with propoxylated glycerol to synthesize a crude EPG. The product is a fatty acid-esterified propoxylated glycerin composition having an average number of oxypropylene units per equivalent of glycerin (propoxylation number) of about 5, an iodine number less than about 5, an average number of fatty acid acyl group carbons per equivalent of glycerin of from about 54 to about 60, and a drop melting point (also called a dropping point as measured by the Mettler Dropping Point method, AOCS Official Method Cc 18-80(93)) of from about 38.9°C (102°F) to about 43.3°C (110°F).

The fatty acid-esterified propoxylated glycerin fat replacement compositions of this invention may be prepared using any suitable method. In general, the procedures described in the prior art for synthesizing other fatty acid-esterified propoxylated glycerin compositions will be appropriate for use provided that the necessary $C_{12}$-$C_{24}$ saturated linear fatty acids or fatty acid derivatives are employed in the esterification step. Such procedures are described, for example, in US Patents Nos 4,861,613 (the White patent, referenced above) and 4,983,329 and in European Patent Publication No. 353,928, the disclosures of which are incorporated by reference herein in their entireties. As is explained in more detail in the above-mentioned publications, either fatty acids or fatty acid equivalents such as fatty acid esters, fatty acid halides, or fatty acid anhydrides may actually be employed in the esterification. The $C_{12}$-$C_{24}$ saturated linear fatty acid acyl groups may also be introduced by using $C_{12}$-$C_{24}$ unsaturated fatty acids in the esterification step and then hydrogenating the esterified propoxylated glycerin composition to increase the proportion of $C_{12}$-$C_{24}$ saturated linear fatty acid acyl groups to the desired level. Any residual free fatty acid remaining in the composition after esterification should preferably be removed or reduced as much as possible to minimize problems with off flavor, off-odor, or storage stability.

The fatty acid-esterified propoxylated glycerin compositions of the present invention are particularly suitable for use as full or partial replacements for the natural fat in cheese such as cream cheese, cheddar cheese, parmesan cheese, and other processed cheeses such as those described in US Patent No 5,211,978. Typically, cheese is highly caloric, having from about 10.34 to about 17.72 kJ/kg (about 70 to about 120 calories per ounce), and having from about 32 to about 55 weight percent of a fat component. The fat component in cheese generally is responsible for from about 46 to about 90% of the caloric content. To achieve a significant reduction in available caloric content, it will generally be desirable for at least about 50 weight percent of the fat component to be a fatty-acid esterified propoxylated glycerin composition of this invention. The balance of the fat component may be milk fat or a different fat substitute, equivalent or mimetic. The amount of the fat replacement composition of the invention may, if desired, constitute up to 100% of the total fat in the cheese product.

In addition to the fat replacement component comprised of the fatty acid-esterified propoxylated glycerin composition, the cheese product of the invention may further comprise one or more conventional additives such as emulsifiers, binding agents, thickeners, curds, milk protein, aroma materials, vegetable proteins (especially soya proteins), flavoring salts and herbs, meat products, fruits, nuts, fungi and the like.

**EXAMPLES**

Example 1

Two EPGs were synthesized from soybean fatty acid and propoxylated glycerin (prepared by reacting 5 or 14 equivalents of propylene oxide per equivalent of glycerin under base-catalyzed conditions) and physically refined. The resulting materials were hydrogenated to saturation (IV < 4), bleached and deodorized. The deodorized products were fortified with a mixed tocopherol blend of 50% Covi-ox T70 and 50% Covitol F1300 (both available from Henkel Corp., La Grange, Illinois, USA) to a level of 0.16%. The finished products were characterized using analytical methods commonly used by the industry to evaluate oils and fats. These methods include Wijs iodine value (AOCS Cd 1-25), dropping point (AOCS Cc 18-80(93)) and solid fat index (AOCS Cd 10-57).

The iodine value for the FHEPG-05 soyate employed in the following examples was 2.2 and for FHEPG-14 soyate it was 1.7. The dropping point for the FHEPG-05 was measured at 79.9 and for FHEPG-14 was measured at 63.7.

The solid fat index data points for the components represented in Figure I are set forth in Table I as follows:

TABLE I

| SOLID FAT INDICES OF EPG BLENDS AND BUTTER FAT | | | | | |
|---|---|---|---|---|---|
| TEMPERATURE °C (°F) | 0 (32) | 10.0 (50) | 23.9 (75) | 33.3 (92) | 40.0 (104) |
| FHEPG-05 | 97.30 | 91.50 | 75.50 | 0.20 | 0.00 |
| FHEPG-14 | 77.50 | 18.60 | 0.20 | 0.04 | 0.00 |
| BUTTER FAT | 87.20 | 69.90 | 26.50 | 4.50 | 0.00 |
| EPG BLEND | 85.00 | 60.10 | 15.20 | 0.00 | 0.00 |

Example 2

| CREAM CHEESE PRODUCT MADE WITH FHEPG-05 AND FHEPG-14 | |
|---|---|
| Ingredients | % |
| FHEPG-14 | 20.00 |
| FHEPG-05 | 13.00 |
| Nonfat Dry Milk | 14.00 |
| Enzyme Modified Dry Milk | 1.00 |
| Rennet Casein | 2.00 |
| Merecol G1 Gum | 0.10 |
| Salt | 0.30 |

(continued)

| CREAM CHEESE PRODUCT MADE WITH FHEPG-05 AND FHEPG-14 | |
|---|---|
| Ingredients | % |
| Disodium Phosphate | 0.25 |
| Sodium Citrate | 0.25 |
| Titanium Dioxide | 0.05 |
| Natural Cream Cheese Flavor | 2.00 |
| Natural Cream Extract | 0.25 |
| Lactic Acid 88% | 1.00 |
| Water | 45.80 |
| Total: | 100.00 |

Procedure:

1. Place all ingredients, except the fat, lactic acid and cream cheese flavor, in a double boiler top. Blend well with a wire whisk. Allow to hydrate for 30 minutes.
2. Heat over boiling water while stirring vigorously until the mix reaches 71.1°C (160°F). Hold at this temperature for 30 minutes.
3. Melt the fats and add to the hot mixture.
4. Add lactic acid and homogenize for 3 minutes at high speed.
5. Pour into plastic cups and refrigerate, covered until set.
6. The cheese product had the texture, organoleptic and other sensory characteristics of natural cream cheese.

Example 3

| CHEDDAR CHEESE PRODUCT MADE WITH FHEPG-05 AND FHEPG-14 | |
|---|---|
| Ingredients | % |
| FHEPG-14 | 18.50 |
| FHEPG-05 | 12.40 |
| Nonfat Dry Milk | 17.50 |
| Rennet Casein | 6.00 |
| Enzyme Modified Dry Milk | 2.60 |
| Salt | 0.60 |
| Oleoresin Paprika | 0.05 |
| Lecithin | 0.02 |
| Merecol G1 Gum | 0.10 |
| Calcium Chloride | 0.01 |
| Sodium Citrate | 2.00 |
| Disodium Phosphate | 0.60 |
| Water | 35.12 |
| Natural Cheddar Cheese Flavor | 2.00 |
| Lactic Acid 88% | 2.00 |
| Total: | 100.00 |

Procedure:

1. Hydrate the casein with about 50% of the water at 22.2°C (72°F).
2. Dissolve the salts and the gum in the remaining 50% of the water; heat to about 71.1 °C (160°F) in a hot water bath.
3. Place fats, lecithin and oleoresin paprika in a tall stainless steel container in a hot water bath. Stir to dissolve. Heat to about 71.1°C (160°F).
4. Combine all dissolved ingredients in the tall stainless steel beaker and homogenize at high speed for 3 minutes.
5. Transfer the homogenized mass to a Hobart bowl heated with a heating mantle and fitted with a blade for mixing.
6. Add the remaining ingredients and mix on high speed for 5 minutes maintaining the temperature of the cheese mass at about 54.4°C (130°F).
7. Press the cheese into a brick-shaped plastic container and cool in the refrigerator until set.
8. Unmold, wrap in a paper-lined foil and store in the refrigerator.
9. The cheese product had the texture, organoleptic and other sensory characteristics of natural cheddar cheese.

Example 4

Hydrogenated rapeseed fatty acid (1423kg) was blended with soybean fatty acid (140kg) to make a free fatty acid blend. The blend was reacted with propoxylated glycerin having a propoxylation number of 5 using the procedures described in US Patent No. 4,983,329. The esterified product was physically refined, hydrogenated to near saturation (IV < about 6), bleached and deodorized. The hydrogenated product was fortified by blending with 0.15% tocopherol blend (50% Covi-ox T70 and 50% Covitol F1300) for 30 minutes at 60°C in a nitrogen atmosphere. The product was transferred to a belt dryer, grated and packaged. The finished product was characterized using analytical methods commonly used by the industry to evaluate oils and fats. These methods include Wijs iodine value, dropping point and solid fat index.

Example 5

The grated product of Example 4 was analyzed and found to have an iodine value of 3.9 and a dropping point of 109.9. The solid fat index ("SFI") was as follows:

| TEMPERATURE °C (°F) | SFI |
|---|---|
| 10.0 (50) | 74.3 |
| 21.1 (70) | 67.4 |
| 26.7 (80) | 62.4 |
| 33.3 (92) | 45.9 |
| 40.0 (104) | 2.6 |

Example 6

| **PARMESAN CHEESE PRODUCT MADE WITH EPG-05 9HR/1LS(IV=3.5)** | |
|---|---|
| Ingredients | % |
| EPG-05 9HR/1LS(IV = 3.5) | 28.00 |
| Nonfat Dry Milk | 32.00 |
| Enzyme Modified Dry Milk | 5.00 |
| Salt | 2.30 |
| Merecol G1 Gum | 0.10 |
| Water | 30.50 |
| Parmesan Cheese Flavor | 2.00 |
| Potassium Sorbate | 0.10 |

(continued)

| PARMESAN CHEESE PRODUCT MADE WITH EPG-05 9HR/1LS(IV=3.5) | |
|---|---|
| Ingredients | % |
| Total: | 100.00 |

Procedure:

1. Dissolve milk powders, gum and salt in warm, 32.2°C (90°F), water in a stainless steel container.
2. Place the container in a hot water bath. While stirring, heat the entire mass to 85.0°C (185°F) and hold for 30 minutes.
3. Homogenize on high speed for 3 minutes while still hot.
4. Cool to 22.2°C (72°F).
5. Add the freeze-dried lactic acid producing starting culture granules as specified by the supplier.
6. Press into a ball and allow to ripen at 22.2°C (72°F) in a clean, dry area for about 45-60 days.
7. Grate and use in the same manner as natural parmesan cheese.
8. The cheese product had the texture, organoleptic and other sensory characteristics of natural parmesan cheese.

## Claims

**1.** A reduced calorie cheese composition comprising a soft or semi-hard cheese wherein from about 50% to about 100% by weight of the fat component is replaced by a fatty acid-esterified propoxylated glycerin composition comprising 1) a fully hydrogenated soybean fatty acid-esterified propoxylated glycerin composition having a propoxylation number of about 5 and 2) a fully hydrogenated soybean fatty acid-esterified propoxylated glycerin composition having a propoxylation number of about 14.

**2.** The cheese composition of claim 1 wherein at least about 75% by weight of the fatty acid in each fatty acid-esterified propoxylated glycerin composition is stearic acid.

**3.** The cheese composition of claim 1 or claim 2 wherein the weight to weight ratio of the first fatty acid-esterified propoxylated glycerin composition to the second fatty acid-esterified propoxylated glycerin composition is from about 60:40 to about 30:70.

**4.** The cheese composition of any one of claims 1 to 3 wherein the fatty acid-esterified propoxylated glycerin composition has a melting profile of more than about 60 at 10.0°C (50°F), between about 15 and 35 at 21.1 °C (70°F) and less than about 5 at 33.3°C (92°F).

**5.** A reduced calorie cheese composition comprising a hard cheese wherein from about 50% to about 100% by weight of the fat component is replaced by a fatty acid-esterified propoxylated glycerin composition having a solid fat index as measured by dilatometry of more than about 25 but less than about 70 at 33.3°C (92°F) and less than about 10 at 40.0°C (104°F), the fatty acid-esterified propoxylated glycerin composition having an average number of oxypropylene units per equivalent of glycerin of from about 4 to 6 and an iodine value of from about 2 to 6, the fatty acids being comprised of about 35 to 45% by weight behenic acid and about 35 to 45% by weight stearic acid.

**6.** The cheese composition of claim 5 wherein the fatty acid-esterified propoxylated glycerin composition is obtainable by esterifying a propoxylated glycerin having an average number of oxypropylene units per equivalent of glycerin of from about 4 to 6 with a fatty acid mixture wherein from about 80 to 95 weight % of the fatty acids in said mixture are derived from rapeseed oil and the balance of said fatty acids are derived from a vegetable oil selected from the group consisting of soybean oil, corn oil, cottonseed oil, olive oil, peanut oil, canola oil, safflower oil, sesame oil, sunflower oil, and mixtures thereof.

**7.** A method of making a reduced calorie soft or semi-hard cheese composition having a fat component comprising replacing from about 50% to about 100% by weight of the fat component with a composition comprised of a fatty acid-esterified propoxylated glycerin composition having a melting profile similar to the melting profile for the

cheese, the fatty acid-esterified propoxylated glycerin composition comprising 1) a fully hydrogenated soybean fatty acid-esterified propoxylated glycerin composition having a propoxylation number of about 5 and 2) a fully hydrogenated soybean fatty acid-esterified propoxylated glycerin composition having a propoxylation number of about 14.

**8.** The method of claim 7 wherein at least about 75% by weight of the fatty acid in each fatty acid-esterified propoxylated glycerin composition is stearic acid.

**9.** The method of claim 7 or claim 8 wherein the weight to weight ratio of the first fatty acid-esterified propoxylated glycerin composition to the second fatty acid-esterified propoxylated glycerin composition is from about 60:40 to about 30:70.

**10.** A method of making a reduced calorie hard cheese composition having a fat component comprising replacing from about 50% to about 100% by weight of the fat component with a composition comprised of a fatty acid-esterified propoxylated glycerin composition having a melting profile similar to the melting profile for the cheese, wherein the fatty acid-esterified propoxylated glycerin composition has a solid fat index as measured by dilatometry of more than about 25 but less than about 70 at 33.3°C (92°F) and less than about 10 at 40.0°C (104°F), the fatty acid-esterified propoxylated glycerin composition having an average number of oxypropylene units per equivalent of glycerin of from about 4 to 6 and an iodine value of from about 2 to 6, the fatty acids being comprised of about 35 to 45% by weight behenic acid and about 35 to 45% by weight stearic acid.

**11.** The method of claim 10 wherein the fatty acid-esterified propoxylated composition is obtainable by esterifying a propoxylated glycerin having an average number of oxypropylene units per equivalent of glycerin of from about 4 to 6 with a fatty acid mixture wherein from about 80 to 95 weight % of the fatty acids in said mixture are derived from rapeseed oil and the balance of said fatty acids are derived from a vegetable oil selected from the group consisting of soybean oil, corn oil, cottonseed oil, olive oil, peanut oil, canola oil, safflower oil, sesame oil, sunflower oil, and mixtures thereof.

## Revendications

**1.** Composition de fromage à teneur réduite en calories, comprenant un fromage à pâte molle ou semi-dure dans lequel environ 50 % à environ 100 % en poids des matières grasses sont remplacés par une composition de glycérol propoxylé estérifié avec un acide gras, comprenant 1) une composition de glycérol propoxylé estérifié avec un acide gras de soja totalement hydrogéné, ayant un indice de propoxylation d'environ 5, et 2) une composition de glycérol propoxylé estérifié avec un acide gras de soja totalement hydrogéné, ayant un indice de propoxylation d'environ 14.

**2.** Composition de fromage suivant la revendication 1, dans laquelle une quantité d'au moins environ 75 % en poids de l'acide gras dans chaque composition de glycérol propoxylé estérifié avec un acide gras consiste en acide stéarique.

**3.** Composition de fromage suivant la revendication 1 ou la revendication 2, dans laquelle le rapport en poids/poids de la première composition de glycérol propoxylé estérifié avec un acide gras à la seconde composition de glycérol propoxylé estérifié avec un acide gras est compris dans l'intervalle d'environ 60:40 à environ 30:70.

**4.** Composition de fromage suivant l'une quelconque des revendications 1 à 3, dans laquelle la composition de glycérol propoxylé estérifié avec un acide gras a un profil de fusion de plus d'environ 60 à une température de 10,0°C (50°F), d'environ 15 à 35 à une température de 21,1°C (70°F) et d'au moins d'environ 5 à une température de 33,3°C (92°F).

**5.** Composition de fromage à teneur réduite en calories, comprenant un fromage à pâte dure dans lequel environ 50 % à environ 100 % en poids des matières grasses sont remplacés par une composition de glycérol propoxylé estérifié avec un acide gras ayant un indice de matières grasses solides, mesuré par dilatométrie, supérieur à environ 25 mais inférieur à environ 70 à une température de 33,3°C (92°F) et inférieur à environ 10 à une température de 40,0°C (104°F), la composition de glycérol propoxylé estérifié avec un acide gras ayant un nombre moyen de motifs oxypropylène par équivalent de glycérol d'environ 4 à 6 et un indice d'iode d'environ 2 à 6, les acides gras étant constitués d'environ 35 à 45 % en poids d'acide béhénique et d'environ 35 à 45 % en poids

d'acide stéarique.

6. Composition de fromage suivant la revendication 5, dans laquelle la composition de glycérol propoxylé estérifié avec un acide gras peut être obtenue en estérifiant un glycérol propoxylé ayant un nombre moyen de motifs oxypropylène par équivalent de glycérol d'environ 4 à 6 avec un mélange d'acides gras dans lequel environ 80 à 95 % en poids des acides gras dudit mélange sont dérivés de l'huile de colza et le reste desdits acides gras est dérivé d'une huile végétale choisie dans le groupe consistant en l'huile de soja, l'huile de maïs, l'huile de graines de cotonnier, l'huile d'olive, l'huile d'arachide, l'huile de canola, l'huile de carthame, l'huile de sésame, l'huile de tournesol et leurs mélanges.

7. Procédé pour la préparation d'une composition de fromage à pâte molle ou semi-dure, à teneur réduite en calories, comprenant des matières grasses, qui comprend le remplacement d'environ 50 % à environ 100 % en poids des matières grasses par une composition constituée d'une composition de glycérol propoxylé estérifié avec un acide gras ayant un profil de fusion similaire au profil de fusion du fromage, la composition de glycérol propoxylé estérifié avec un acide gras comprenant 1) une composition de glycérol propoxylé estérifié avec un acide gras de soja totalement hydrogéné ayant un indice de propoxylation d'environ 5, et 2) une composition de glycérol propoxylé estérifié avec un acide gras de soja totalement hydrogéné ayant un indice de propoxylation d'environ 14.

8. Procédé suivant la revendication 7, dans lequel une quantité d'au moins environ 75 % en poids de l'acide gras dans chaque composition de glycérol propoxylé estérifié avec un acide gras consiste en acide stéarique.

9. Procédé suivant la revendication 7 ou la revendication 8, dans lequel le rapport en poids/poids de la première composition de glycérol propoxylé estérifié avec un acide gras à la seconde composition de glycérol propoxylé estérifié avec un acide gras est compris dans l'intervalle d'environ 60:40 à environ 30:70.

10. Procédé pour la préparation d'une composition de fromage à pâte dure, à teneur réduite en calories, comprenant des matières grasses, qui comprend le remplacement d'environ 50 % à environ 100 % en poids des matières grasses par une composition constituée d'une composition de glycérol propoxylé estérifié avec un acide gras ayant un profil de fusion similaire au profil de fusion du fromage, dans lequel la composition de glycérol propoxylé estérifié avec un acide gras a un indice de matières grasses solides, mesuré par dilatométrie, supérieur à environ 25 mais inférieur à environ 70 à une température de 33,3°C (92°F) et inférieur à environ 10 à une température de 40,0°C (104°F), la composition de glycérol propoxylé estérifié avec un acide gras ayant un nombre moyen de motifs d'oxypropylène par équivalent de glycérol d'environ 4 à 6 et un indice d'iode d'environ 2 à 6, les acides gras étant constitués d'environ 35 à 45 % en poids d'acide béhénique et d'environ 35 à 45 % en poids d'acide stéarique.

11. Procédé suivant la revendication 10, dans lequel la composition propoxylée estérifiée avec un acide gras peut être obtenue en estérifiant un glycérol propoxylé ayant un nombre moyen de motifs oxypropylène par équivalent de glycérol d'environ 4 à 6 avec un mélange d'acides gras dans lequel environ 80 à 95 % en poids des acides gras dudit mélange sont dérivés de l'huile de colza et le reste desdits acides gras est dérivé d'une huile végétale choisie dans le groupe consistant en l'huile de soja, l'huile de maïs, l'huile de graines de cotonnier, l'huile d'olive, l'huile d'arachide, l'huile de canola, l'huile de carthame, l'huile de sésame, l'huile de tournesol et leurs mélanges.

## Patentansprüche

1. Käsezusammensetzung mit vermindertem Kaloriengehalt umfassend einen Weichkäse oder halbharten Schnittkäse, bei dem etwa 50 bis etwa 100 Gew.-% der Fettkomponente durch eine fettsäureveresterte propoxylierte Glycerinzusammensetzung ersetzt sind, die 1) eine vollständig hydrierte sojafettsäureveresterte propoxylierte Glycerinzusammensetzung mit einer Propoxylierungszahl von etwa 5 und 2) eine vollständig hydrierte sojafettsäureveresterte propoxylierte Glycerinzusammensetzung mit einer Propoxylierungszahl von etwa 14 umfaßt.

2. Käsezusammensetzung nach Anspruch 1, worin mindestens etwa 75 Gew.-% der Fettsäure in jeder fettsäureveresterten propoxylierten Glycerinzusammensetzung Stearinsäure ist.

3. Käsezusammensetzung nach Anspruch 1 oder Anspruch 2, worin das Gewichtsverhältnis von erster fettsäureveresterter propoxylierter Glycerinzusammensetzung zu zweiter fettsäureveresterter propoxylierter Glycerinzusammensetzung etwa 60:40 bis etwa 30:70 ist.

4. Käsezusammensetzung nach einem der Ansprüche 1 bis 3, worin die fettsäureveresterte propoxylierte Glycerinzusammensetzung ein Schmelzprofil von mehr als etwa 60 bei 10,0°C (50°F), zwischen etwa 15 und 35 bei 21,1°C (70°F) und weniger als etwa 5 bei 33,3°C (92°F) hat.

5. Käsezusammensetzung mit vermindertem Kaloriengehalt umfassend einen Hartkäse, worin etwa 50 bis etwa 100 Gew.-% der Fettkomponente durch eine fettsäureveresterte propoxylierte Glycerinzusammensetzung mit einem Festfettindex, gemessen mit Dilatometrie, von mehr als etwa 25, aber weniger als etwa 70 bei 33,3°C (92°F) und weniger als etwa 10 bei 40,0°C (104°F) ersetzt sind, wobei die fettsäureveresterte propoxylierte Glycerinzusammensetzung eine durchschnittliche Anzahl von Oxypropyleneinheiten pro Glycerinäquivalent von etwa 4 bis 6 und einen Iodwert von etwa 2 bis 6 hat, wobei die Fettsäuren zu etwa 35 bis 45 Gew.-% aus Behensäure und zu etwa 35 bis 45 Gew.-% aus Stearinsäure gebildet werden.

6. Käsezusammensetzung nach Anspruch 5, worin die fettsäureveresterte propoxylierte Glycerinzusammensetzung erhältlich ist, indem ein propoxyliertes Glycerin mit einer durchschnittlichen Anzahl von Oxypropyleneinheiten pro Glycerinäquivalent von etwa 4 bis 6 mit einer Fettsäuremischung verestert wird, worin etwa 80 bis 95 Gew.-% der Fettsäuren in der Mischung von Rapsöl stammen und der Rest der Fettsäuren von einem Pflanzenöl stammt, das ausgewählt ist aus der Gruppe bestehend aus Sojaöl, Maisöl, Baumwollsaatöl, Olivenöl, Erdnußöl, Canolaöl, Safloröl, Sesamöl, Sonnenblumenöl und Mischungen davon.

7. Verfahren zur Herstellung einer Weichkäse- oder halbharten Schnittkäsezusammensetzung mit vermindertem Kaloriengehalt mit einer Fettkomponente umfassend, daß man etwa 50 bis etwa 100 Gew.-% der Fettkomponente durch eine Zusammensetzung ersetzt, die von einer fettsäureveresterten propoxylierten Glycerinzusammensetzung mit einem Schmelzprofil, das dem Schmelzprofil für Käse ähnlich oder gleich ist, gebildet wird, wobei die fettsäureveresterte propoxylierte Glycerinzusammensetzung 1) eine vollständig hydrierte sojafettsäureveresterte propoxylierte Glycerinzusammensetzung mit einer Propoxylierungszahl von etwa 5 und 2) eine vollständig hydrierte sojafettsäureveresterte propoxylierte Glycerinzusammensetzung mit einer Propoxylierungszahl von etwa 14 umfaßt.

8. Verfahren nach Anspruch 7, worin mindestens etwa 75 Gew.-% der Fettsäure in jeder fettsäureveresterten propoxylierten Glycerinzusammensetzung Stearinsäure ist.

9. Verfahren nach Anspruch 7 oder Anspruch 8, worin das Gewichtsverhältnis von erster fettsäureveresterter propoxylierter Glycerinzusammensetzung zu zweiter fettsäureveresterter propoxylierter Glycerinzusammensetzung etwa 60:40 bis etwa 30:70 ist.

10. Verfahren zur Herstellung einer Hartkäsezusammensetzung mit vermindertem Kaloriengehalt mit einer Fettkomponente umfassend, daß man etwa 50 bis etwa 100 Gew.-% der Fettkomponente durch eine Zusammensetzung ersetzt, die von einer fettsäureveresterten propoxylierten Glycerinzusammensetzung mit einem Schmelzprofil, das dem von Käse ähnlich oder gleich ist, gebildet wird, wobei die fettsäureveresterte propoxylierte Glycerinzusammensetzung einen Festfettindex, gemessen mit Dilatometrie, von mehr als etwa 25 aber weniger als etwa 70 bei 33,3°C (92°F) und weniger als etwa 10 bei 40,0°C (104°F) hat, die fettsäureveresterte propoxylierte Glycerinzusammensetzung eine durchschnittliche Anzahl an Oxypropyleneinheiten pro Glycerinäquivalent von etwa 4 bis 6 und einen Iodwert von etwa 2 bis 6 hat, wobei die Fettsäuren zu etwa 35 bis 45 Gew.-% aus Behensäure und zu etwa 35 bis 45 Gew.-% aus Stearinsäure gebildet werden.

11. Verfahren nach Anspruch 10, worin die fettsäureveresterte propoxylierte Zusammensetzung erhältlich ist, indem ein propoxyliertes Glycerin mit einer durchschnittlichen Anzahl von Oxypropyleneinheiten pro Glycerinäquivalent von etwa 4 bis 6 mit einer Fettsäuremischung verestert wird, worin etwa 80 bis 95 Gew.-% der Fettsäuren in der Mischung von Rapsöl stammen und der Rest der Fettsäuren von einem Pflanzenöl stammt, das ausgewählt ist aus der Gruppe bestehend aus Sojaöl, Maisöl, Baumwollsaatöl, Olivenöl, Erdnußöl, Canolaöl, Safloröl, Sesamöl, Sonnenblumenöl und Mischungen davon.

# FIG. 1

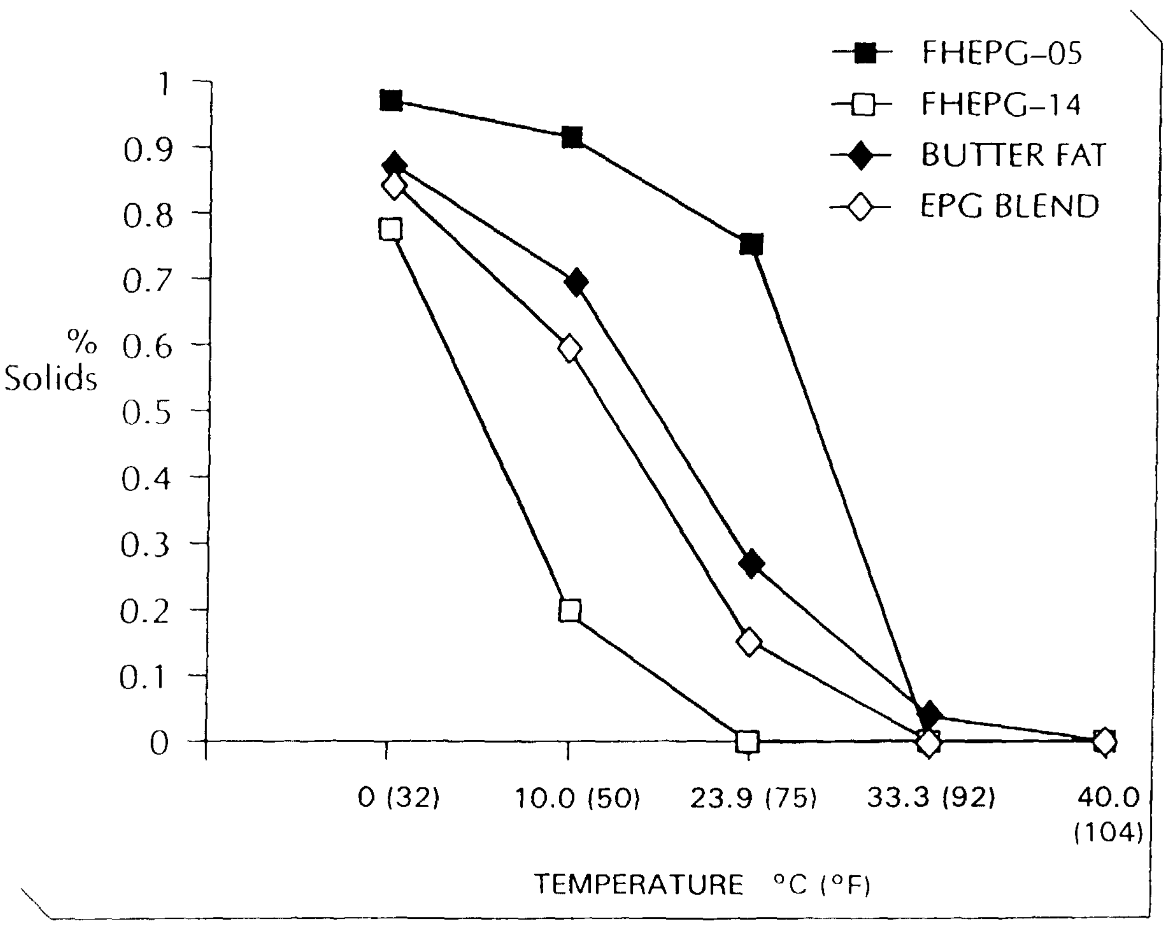
FHEPG-05
FHEPG-14
BUTTER FAT
EPG BLEND
1
0.9
0.8
0.7
% Solids
0.6
0.5
0.4
0.3
0.2
0.1
0
0 (32)
10.0 (50)
23.9 (75)
33.3 (92)
40.0 (104)
TEMPERATURE °C (°F)

FIG. 2

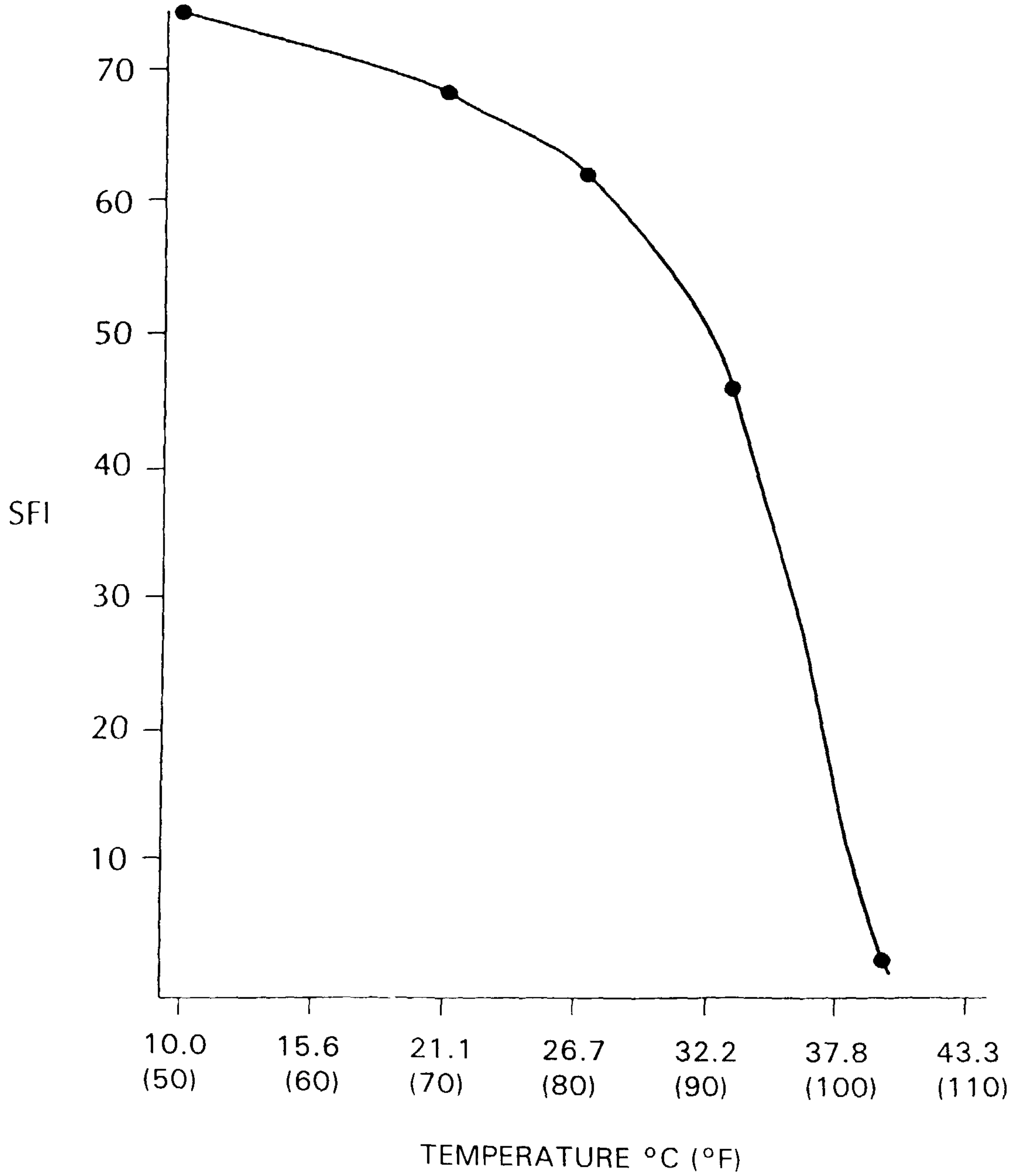
SFI
70
60
50
40
30
20
10
10.0 (50)
15.6 (60)
21.1 (70)
26.7 (80)
32.2 (90)
37.8 (100)
43.3 (110)
TEMPERATURE °C (°F)